# EUROPEAN PATENT APPLICATION

(11) **EP 2 204 313 A1**
(43) Date of publication of application: **07.07.2010**
(21) Application number: 08700111.1
(22) Date of filing: 14.01.2008
(51) Int. Cl.: B62J 6/06, B62J 6/08

(54) **A DRIVER DEVICE FOR A BICYCLE DYNAMO**

(30) Priority: 27.09.2007 CN 200710009612
(71) Applicant: Lee, Heiwang, Huli District Xiamen, Fujian 361006 (CN); Guo, Huimin, Huli District Xiamen, Fujian 361006 (CN)
(72) Inventor: Lee, Heiwang, Huli District Xiamen, Fujian 361006 (CN); Guo, Huimin, Huli District Xiamen, Fujian 361006 (CN)
(74) Representative: Chaillot, Geneviève
(86) International application number: PCT/CN2008/070097
(87) International publication number: WO 2009/039727

(57) **Abstract**

A driver for a bicycle dynamo connected to the dynamo includes a first driven wheel (132) and a second wheel (136) driving the first wheel (132). The first wheel (132) is mounted on the dynamo. A first magnetic area is set on the surface of the first wheel (132). The second wheel (136) is arranged in a distance from the first wheel (132). A second magnetic area (137a) is set on the second wheel (136). The second magnetic area (137a) is opposite to the first magnetic area (134). When the second wheel (136) is rotated by a user through the pedal, the second magnetic area (137a) rotates. The magnetic force generated between the second magnetic (137a) and the first magnetic (134) drives the first magnetic area (134) rotating to drive the dynamo connected to the first wheel working.

## Description

### BACKGROUND OF THE INVENTION

### 1. Field of the Invention

The present invention relates to a driver device, particularly to a driver device for a bicycle dynamo.

### 2. Description of the Related Art

Usually, typical bicycles equip with no lighting or warning device, so some traffic accidents readily happen while drivers are not familiar with the road condition or while the bicycle itself cannot be clearly recognized at night. Accordingly, bicycles with lighting or warning devices are invented to solve the aforementioned problems.

However, radiating members in the lighting or warning devices are mostly electrically driven by batteries. Apparently, such radiating means is considered the wasteful energy and does not comply with today's concept of environmental protection. Therefore, the application of batteries to radiate obviously departs from the practical demand in the future market.

In other aspect, there are means developed for generating electric power by a frictional physic contact, such as incessantly rubbing objects. In this manner, the lighting device is favorably provided with electricity. However, with such radiating means, the wheels of the bicycle are facilely worn out. In addition, drivers have to apply more strength during riding. Thus, this kind of development does not conform to the practical need.

As a result, an improved radiating device for lighting and warning should be developed to deal with the questions of the conventional radiating device, such as wasting battery energy and inconsistency with the concept of environmental protection.

### SUMMARY OF THE INVENTION

Therefore, the objective of the present invention is to offer a driver device for a bicycle dynamo that efficiently enhances the using rate of energy, thereby concurrently diminishing the wastage of batteries and remedying those conventional environmental drawbacks.

The driver device for a bicycle dynamo in accordance with the present invention essentially comprises a first driven wheel that is rotated and installed on a spindle of the dynamo. Wherein, at least one first magnetic areas are defined on a surface of the first driven wheel.

A second driven wheel for driving the first driven wheel is spatially disposed relative to the first driven wheel; wherein, at least one second magnetic area is defined on a surface of the second driven wheel for being disposed relative to the first magnetic area.

A plurality of first magnetic areas are disposed on the surface of the first driven wheel, and the first magnetic areas could be all arranged by either the north magnetic pole or the south magnetic pole.

A plurality of first magnetic areas are disposed on the surface of the first driven wheel, and the first magnetic areas could be grouped into the north magnetic pole and the south magnetic pole.

A plurality of the second driven wheel are disposed on the surface of the second driven wheel, and the second magnetic areas could be all arranged by either the north magnetic pole or the south magnetic pole.

A plurality of second magnetic areas are disposed on the surface of the second driven wheel, and the second magnetic areas could be grouped into the north magnetic pole and the south magnetic pole.

The second magnetic area is disposed in the face of the first magnetic area.

A moving path of the second magnetic area is disposed in the face of the first magnetic area.

The second magnetic area is disposed in the face of a moving path of the first magnetic area.

A moving path of the second magnetic area is disposed in the face of a moving path of the first magnetic area.

Whereby, a set of wheels is provided in the driver device for generating magnetism. By means of the repulsive force and the attractive force provided by the magnetism, the kinetic energy would be transmitted to the dynamo without contact for further generating electricity while the bicycle is ridden. Accordingly, in view of the transmission of energy via the non-contacted magnetism, the consumption of energy would be lost during the transmission for efficiently advancing the usage of applicable energy.

Further, the magnetic driver is installed on the dynamo, so the provided kinetic energy could be transferred to the dynamo for generating electricity. Whereby, the radiating device could illuminate when it receives the current. Therefore, additional batteries are not needed. Concurrently, the drawbacks of wastage of batteries and lack of environment protection are corrected.

### BRIEF DESCRIPTION OF THE DRAWINGS

Fig. 1 is a side view showing a first preferred embodiment of the present invention with a radiating system;
Fig. 2 is a side view showing a driver device for a dynamo of the present invention with the radiating system in Fig. 1;
Fig. 3 is a side view showing an arrangement of a moving path of a second magnetic area disposed relative to a moving path of a first magnetic area in Fig. 1; and
Fig. 4 is a side view of a spindle of the driver device being detachable for installing on a spindle of the dynamo in Fig. 1.

### DESCRIPTION OF ELEMENTS IN THE DRAWINGS

| | | | | | |
|---|---|---|---|---|---|
| 100 | bicycle | 110 | radiating device | 120 | dynamo |
| 122 | spindle | 130 | driver device | 132 | first driven wheel |
| 132a | first spindle | 132b | first turntable | 133 | central line |
| 133a | first side portion | | | 133b | first end portion |
| 134 | first magnetic area | | | 136 | second driven wheel |
| 136a | second spindle | | | 136b | second turntable |
| 137 | central line | | | 138 | second magnetic area |
| 137a | second side portion | | | 137b | second end portion |
| 138 | second magnetic area | | | 150 | pedal |

### DETAILED DESCRIPTION OF THE PREFERRED EMBODIMENTS

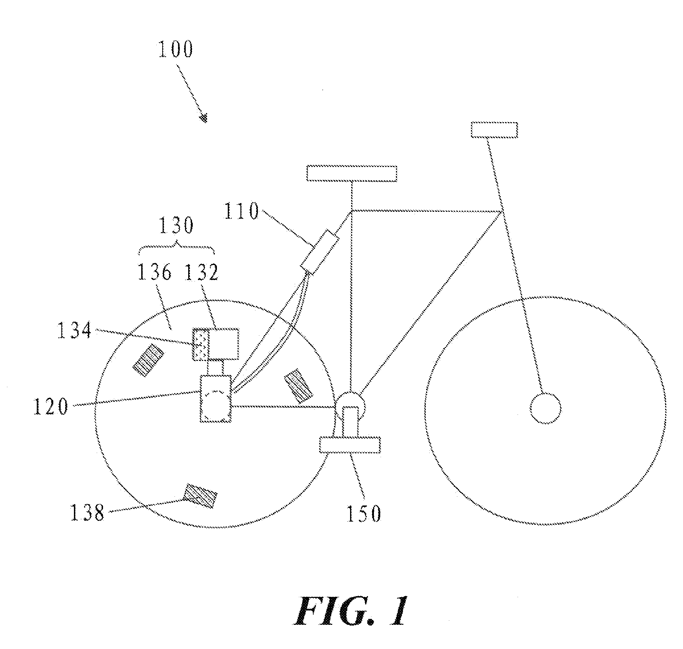

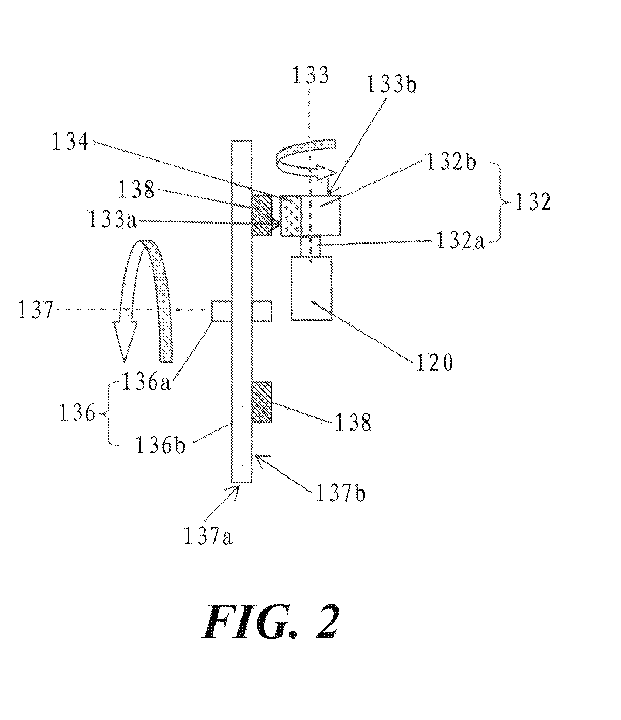

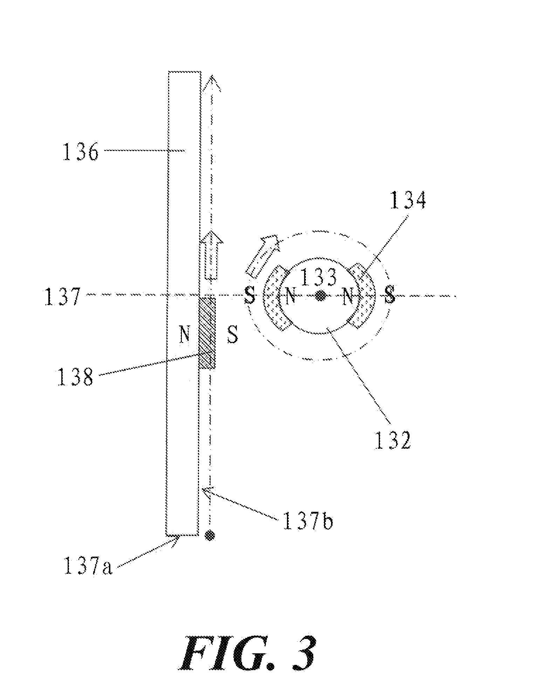

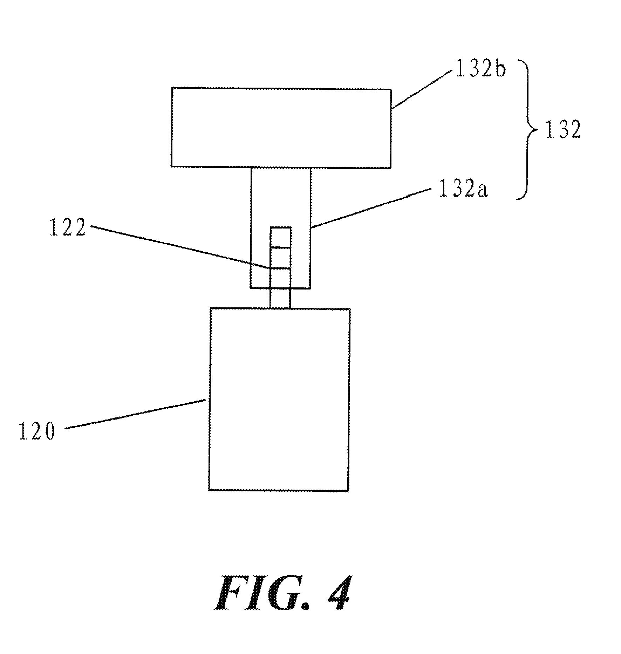

Referring to Figs. 1 and 2 respectively show a side view of a driver device for a bicycle dynamo 100 and a side view of the driver device 130 of the dynamo 120. Wherein, the driver device for a bicycle dynamo 100 comprises a radiating device 110, a dynamo 120, and a driver device 130. Whereby, the dynamo 120 connects to the radiating device 110 for providing the radiating device 110 with electricity; the driver device 130 connects to the dynamo 120 for providing the dynamo 120 with kinetic energy, so that the dynamo 120 is able to generate electricity. The driver device 130 includes a first driven wheel 132 and a second driven wheel 136 that drives the first driven wheel 132. Herein, the first driven wheel 132 is installed on the dynamo 120, and the second driven wheel 136 is installed relative to the first driven wheel 132 by a distance, so that the second driven wheel 136 would thence trigger the first driven wheel 132 via a non-touchable way. A first magnetic area 134 with a first magnetism (like a north magnetic pole or a south magnetic pole) is defined on a surface of the first driven wheel 132; a second magnetic area 138 with a second magnetism (like a north magnetic pole or a south magnetic pole) is defined on a surface of the second driven wheel 136. Moreover, the second magnetic area 138 is disposed relative to the first magnetic area 134. As a note, the magnetism could be accordingly generated between the second magnetic area 138 and the first magnetic area 134 as a result of the second magnetic area 138 and the first magnetic area 134 being relatively disposed. As a result, it is not limited in this invention that the second magnetic area 138 has to be disposed in the face of the first magnetic area 134. That is to say, a moving path of the second magnetic area 138 could face the first magnetic area 134, the second magnetic area 138 could face a moving path of the first magnetic area 134, or the moving path of the second magnetic area 138 could face the moving path of the first magnetic area 134. Summarily, any previous mentioned means could be alternatively applied as long as the magnetism is generated between the second magnetic area 138 and the first magnetic area 134. Besides, the second magnetism of the second magnetic area 138 and the first magnetism of the first magnetic area 134 could be arranged either by the same magnetism or by different magnetisms for respectively generating a repulsive force or an attractive force between each other. Especially, when a plurality of first magnetic areas 134 and a plurality of second magnetic areas 138 are individually defined on the first driven wheel 132 and the second driven wheel 136, the first magnetic areas 134 and the second magnetic areas 138 could be arranged by the same magnetism (like the north magnetic pole or the south magnetic pole). Alternatively, the first magnetic areas 134 and the second magnetic areas 138 could be also arranged by the north magnetic pole and the south magnetic pole. Namely, some of the first magnetic areas 134 are defined by the north magnetic pole, and some of which are defined by the south magnetic pole. Similarly, the arrangement of magnetism in the second magnetic areas 138 is same as that of the first magnetic areas 134. In this embodiment, the surfaces of the first magnetic areas 134 and the second magnetic areas 138 are all defined by the same south magnetic pole, so that a repulsive force is thence produced. Further, the moving path of the second magnetic area 138 is correspondingly disposed relative to the moving path of the first magnetic area 134 (as shown by Fig. 3), and a central line 137 of the moving path of the second magnetic area 138 is perpendicular to a central line 137 of the moving path of the first magnetic area 134, so that the a magnetic function would be performed when a certain section of the moving path of the second magnetic area 138 meets the first magnetic area 134. When a pedal 150 on the bicycle is trodden, the second driven wheel 136 would thence bring the second magnetic area 138 to rotate, and the magnetism generated between the second magnetic area 138 and the first magnetic area 134 could accordingly rotate the first magnetic area 134, so that the dynamo 120 connected to the first driven wheel 132 could be driven to generate electricity. In this embodiment, the first driven wheel 132 includes a first spindle 132a and a first turntable 132b connected to the first spindle 132a. Wherein, the first spindle 132a connects to the dynamo 120, and the first turntable 132b has a first side portion 133a surrounding a central line 133 of the first spindle 132a and has a first end portion 133b penetrating the central line 133 of the first spindle 132a. The second driven wheel 136 has a second spindle 136a and a second turntable 136b connected to the second spindle 136a. Moreover, the second turntable 136b has a second side portion 137a surrounding a central line 137 of the second spindle 136a, and has a second end portion 137b penetrating the central line 137 of the second spindle 136a. Additionally, the first magnetic area 134 is disposed on the first side portion 133a, and the second magnetic area 138 is disposed on the second end portion 137b. Due to the fact that the central line 137 of the second spindle 136a is substantially perpendicular to the central line 133 of the first spindle 132a, the second end portion 137b thence faces the first side portion 133a. Thus, the second magnetic area 138 accordingly faces the first magnetic area 134. In this preferred embodiment, the second driven wheel 136 is not limited to be applied as the bicycle wheel. Alternatively, the second driven wheel 136 could also be applied to the wheel disk installed on the wheel of the bicycle. Referring to Fig. 4, the first spindle 132a of the first driven wheel 132 in the driver device 130 could be alternatively dispatched to further install on the spindle 122 of the dynamo 120. As a result, when the driver device 130 is not in use, or when the first driven wheel 132 needs to be equipped with the first magnetic area 134 in a different arrangement, the first driven wheel 132 could be directly dismantled of the dynamo 120. In the embodiment, the first spindle 132a of the first driven wheel 132 is threaded to the spindle 122 of the dynamo 120. As it should be, other coupling means or buckling methods could be alternatively applied. Optionally, the first spindle 132a of the first driven wheel 132 is replaced by the spindle 122 of the dynamo 120. Whereby, the first turntable 132b of the first driven wheel 132 in the driver device 130 could be directly taken apart for being installed on the spindle 122 of the dynamo 120. Additionally, the radiating device in this embodiment could adopt an LED. As it should be, bulbs or other illuminating means could be alternatively applied.

Accordingly, the radiating system in the present invention utilizes the magnetic driver device installed between the bicycle and the dynamo. Whereby, the magnetic driver device facilitates the energy transmission between the bicycle and the dynamo, so that the kinetic energy provided by the bicycle could be transmitted to the dynamo for generating electricity. Accordingly, the magnetic driver device has a set of driven wheels capable of generating magnetism therebetween by a non-touchable or non-contacted way. One of the driven wheels is installed on the dynamo, and the other one is installed on the bicycle wheel. Therefore, by applying the repulsive force generated from the same magnetism and the attractive force generated from the opposite magnetism, the kinetic energy from the bicycle wheel could be transmitted to the dynamo without contact for generating electricity during a riding. Accordingly, less energy would be consumed in time of transmission, and the environmental issue as well as the wastage of batteries would be also considered. Therefore, the present invention is favorably designed to be in conformity with the future market that pursues a green demand.

To sum up, the present invention takes advantage of using the non-contacted energy transmission - magnetism - on the bicycle adapted to the driver device of the dynamo for generating electricity. Since magnetism is a kind of non-contacted transmission, the kinetic energy generated in time of treading the pedal of the bicycle could be transmitted to the dynamo by the driver device, and the problem of consuming energy via rubbing is also favorably diminished. Moreover, a minimum of the resistance is produced little when the present invention adopts the non-contacted driving means. Therefore, riders do not have to provide much strength while riding the bicycle for generating electricity, and the device would not be readily worn out.

## Claims

1. A driver device for a bicycle dynamo comprising a first driven wheel that is rotated and installed on a spindle of said dynamo; wherein, at least one first magnetic area being defined on a surface of said first driven wheel.

2. The driver device as claimed in claim 1, wherein, a second driven wheel for driving said first driven wheel is disposed relative to said first driven wheel with a distance; wherein, at least one second magnetic area is defined on a surface of said second driven wheel, and said second magnetic area is disposed relative to said first magnetic area.

3. The driver device as claimed in claim 2, wherein, a plurality of first magnetic areas are disposed on said surface of said first driven wheel, and said first magnetic areas could be arranged by either the north magnetic pole or the south magnetic pole.

4. The driver device as claimed in claim 2, wherein, a plurality of first magnetic areas are disposed on said surface of said first driven wheel, and said first magnetic areas could be grouped into the north magnetic pole and the south magnetic pole.

5. The driver device as claimed in claim 2, wherein, a plurality of said second driven wheel are disposed on said surface of said second driven wheel, and said second magnetic areas could be arranged by either the north magnetic pole or the south magnetic pole.

6. The driver device as claimed in claim 2, wherein, a plurality of second magnetic areas are disposed on said surface of said second driven wheel, and said second magnetic areas could be grouped into the north magnetic pole and the south magnetic pole.

7. The driver device as claimed in claims 2, 3, 4, 5, or 6, wherein, said second magnetic area is disposed in the face of said first magnetic area.

8. The driver device as claimed in 2, 3, 4, 5, or 6, wherein, a moving path of said second magnetic area is disposed in the face of said first magnetic area.

9. The driver device as claimed in 2, 3, 4, 5, or 6, wherein, said second magnetic area is disposed in the face of a moving path of said first magnetic area.

10. The driver device as claimed in 2, 3, 4, 5, or 6, wherein, a moving path of said second magnetic area is disposed in the face of a moving path of said first magnetic area.
